# EUROPEAN PATENT APPLICATION

(11) **EP 4 801 137 A2**
(43) Date of publication of application: **02.09.2026**
(21) Application number: 26192730.5
(22) Date of filing: 03.07.2025
(51) Int. Cl.: H04W 72/02

(54) **METHODS AND APPARATUS FOR LOGICAL CHANNEL PRIORITIZATION ENHANCEMENTS IN MOBILE COMMUNICATIONS**

(30) Priority: 09.07.2024 US 202463668784 P
(62) Document number(s) of the earlier application(s) in accordance with Art. 76 EPC: 25187179.4 / 4 679 924
(71) Applicant: HTC Corporation, Taoyuan City 330 (TW)
(72) Inventor: LEE, Yen-Yi, 330 Taoyuan City (TW)
(74) Representative: Wagner & Geyer

(57) **Abstract**

Various solutions for logical channel prioritization (LCP) enhancements in mobile communications are described. An apparatus may select a plurality of logical channels for an uplink (UL) grant. The apparatus may allocate resources of the UL grant to one or more of the logical channels in a decreasing priority order. Each of the one or more logical channels carries delay-critical data or is associated with a positive number of tokens. Then, the apparatus may decrement the positive number of tokens for each of the one or more logical channels by a total size of medium access control (MAC) service data units (SDUs) served to the corresponding logical channel. After that, the apparatus may multiplex the MAC SDUs in a MAC protocol data unit (PDU) for transmission on the UL grant to a network node.

## Description

### TECHNICAL FIELD

The present disclosure is generally related to mobile communications and, more particularly, to logical channel prioritization (LCP) enhancements in mobile communications.

### BACKGROUND

Unless otherwise indicated herein, approaches described in this section are not prior art to the claims listed below and are not admitted as prior art by inclusion in this section.

The wireless communications network has grown exponentially over the years. A long-term evolution (LTE) system offers high peak data rates, low latency, improved system capacity, and low operating cost resulting from simplified network architecture. LTE systems, also known as the 4^{th} generation (4G) system, also provide seamless integration to older wireless networks, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). Alternatively, a wireless network may include a hybrid of 2G/3G/4G systems. In 3^{rd} generation partner project (3GPP), the next generation mobile network (NGMN) board has decided to focus the future NGMN activities on defining the end-to-end requirements for 5^{th} generation (5G) new radio (NR) systems, 5G-advanced systems, and 6G systems.

LCP is a medium access control (MAC) layer procedure that is responsible for selecting which data to transmit when the available radio resources for uplink (UL) transmission are limited. In 3GPP Release 18 for 5G NR, a priority-based token bucket algorithm is adopted for UL resource allocation in the LCP procedure, where each logical channel is associated with a priority, a prioritized bit rate (PBR), and a bucket size duration (BSD). The basic idea is to meet the PBR for all selected logical channels in a decreasing priority order based on whether there are tokens available in the bucket of each logical channel. After the PBR of all selected logical channels is met, if any UL resource remains, all selected logical channels would be served in a strict decreasing priority order regardless of the number of tokens in their buckets. Accordingly, the priority-based token bucket algorithm may achieve PBR-based fairness.

However, there may be some issues with the priority-based token bucket algorithm. For example, the priority-based token bucket algorithm does not take into account the transmission requirement of delay-critical data in logical channels. As a result, in cases where there is delay-critical data in a logical channel without a positive number of tokens in the bucket, the logical channel will not be allocated with resources to transmit its delay-critical data to meet the delay requirements, even if it is a logical channel of a higher priority order. That is, the legacy LCP procedure may not ensure the in-time transmission of the delay-critical data regardless of the priority order of the logical channel, and this is detrimental to applications or services that require low-latency communication, such as extended reality (XR), remote control and teleoperation (e.g., telesurgery), industrial automation, vehicle-to-everything (V2X) applications.

Therefore, there is a need to provide proper schemes to address this issue.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is proposing schemes, concepts, designs, systems, methods and/or apparatus pertaining to LCP enhancements in mobile communications. It is believed that the above-described issue would be avoided or otherwise alleviated by implementing one or more of the proposed schemes described herein.

In one aspect, an apparatus may comprise a transceiver which, during operation, wirelessly communicates with a network node. The apparatus may also comprise a processor communicatively coupled to the transceiver. The processor, during operation, may perform operations comprising selecting a plurality of logical channels for an UL grant. The processor may also perform operations comprising allocating resources of the UL grant to one or more of the logical channels in a decreasing priority order, wherein each of the one or more logical channels carries delay-critical data or is associated with a positive number of tokens. The processor may further perform operations comprising decrementing the positive number of tokens for each of the one or more logical channels by a total size of MAC service data units (SDUs) served to the corresponding logical channel. The processor may further perform operations comprising multiplexing the MAC SDUs in a MAC protocol data unit (PDU) for transmission on the UL grant to the network node via the transceiver.

In one aspect, a network node may comprise a transceiver which, during operation, wirelessly communicates with an apparatus. The network node may also comprise a processor communicatively coupled to the transceiver. The processor, during operation, may perform operations comprising transmitting, via the transceiver, a radio resource control (RRC) signaling to the apparatus, wherein the RRC signaling comprises a LogicalChannelConfig information element (IE) comprising a first threshold. The processor may also perform operations comprising receiving, via the transceiver, a MAC protocol data unit (PDU) with a plurality of MAC SDUs multiplexed therein from the apparatus, wherein the MAC SDUs are served to one or more logical channels in the apparatus, each of the one or more logical channels carries delay-critical data or is associated with a positive number of tokens, and wherein the delay-critical data is associated with a remaining time of a discard timer and the remaining time is less than the first threshold.

In one aspect, an apparatus may comprise a transceiver which, during operation, wirelessly communicates with a network node. The apparatus may also comprise a processor communicatively coupled to the transceiver. The processor, during operation, may perform operations comprising selecting a plurality of logical channels for an UL grant. The processor may also perform operations comprising allocating resources of the UL grant to one or more of the logical channels in a decreasing priority order, wherein each of the one or more logical channels is associated with a positive number of tokens. The processor may further perform operations comprising determining not to decrement the positive number of tokens for each of the one or more logical channels with delay-critical data remained after the resource allocation. The processor may further perform operations comprising multiplexing a plurality of MAC SDUs served to the one or more logical channels in a MAC PDU for transmission on the UL grant to the network node via the transceiver.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (loT) and Narrow Band Internet of Things (NB-IoT), Industrial Internet of Things (IloT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario of the priority-based token bucket algorithm for UL resource allocation in the LCP procedure under current 5G NR framework.
FIG. 2 is a diagram depicting an example scenario of a communication environment in which various solutions and schemes in accordance with the present disclosure may be implemented.
FIG. 3 is a diagram depicting an example scenario of the enhanced LCP procedure in accordance with an implementation of the present disclosure.
FIG. 4 is a block diagram of an example communication system in accordance with an implementation of the present disclosure.
FIG. 5 is a flowchart of an example process in accordance with an implementation of the present disclosure.
FIG. 6 is a flowchart of another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to LCP enhancements in mobile communications. According to the present disclosure, a number of possible solutions may be implemented separately or jointly. That is, although these possible solutions may be described below separately, two or more of these possible solutions may be implemented in one combination or another.

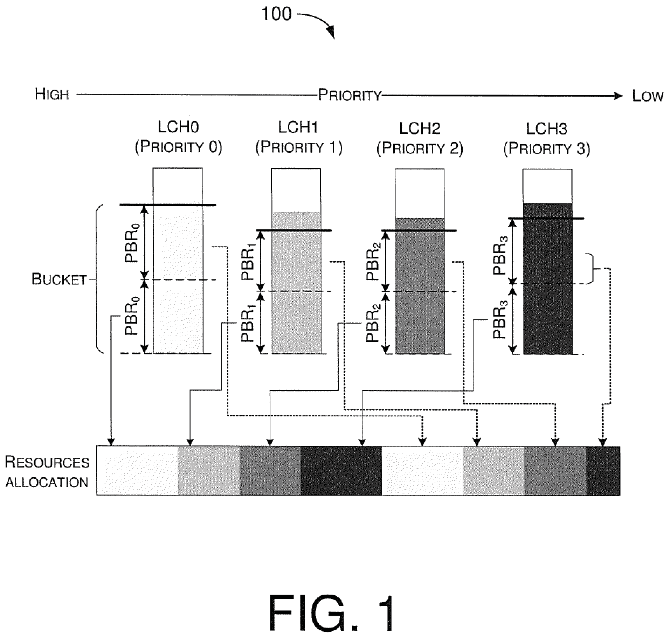

In the current 5G NR framework for the LCP procedure, each logical channel is associated with a priority, a PBR, and a BSD, where the number of tokens (denoted as Bj) in the bucket of each logical channel is initialized to zero when the logical channels are established. Then, for each logical channel, the MAC entity increments Bj by the product PBR × T before every instance of the LCP procedure, where T is the time elapsed since Bj was last incremented. If the value of Bj is greater than the bucket size (i.e., PBR × BSD), Bj is set to the bucket size. FIG. 1 illustrates an example scenario 100 of the priority-based token bucket algorithm for UL resource allocation in the LCP procedure under the current 5G NR framework. As shown in FIG. 1, after selecting logical channels for an UL grant, all selected logical channels with Bj > 0 are allocated resources in a decreasing priority order to meet the PBRs for all selected logical channels. After the resource allocation, Bj of each logical channel is decremented by the total size of MAC SDUs served to the logical channel j. Then, if any UL resource remains, all selected logical channels are served in a strict decreasing priority order (regardless of the value of Bj) until either the data for that logical channel or the UL grant is exhausted, whichever comes first. It should be noted that, in the present disclosure, the selection of logical channels in the LCP procedure is performed in accordance with the rules specified in 3GPP standards, and a detailed description thereof is omitted herein for brevity.

Although the priority-based token bucket algorithm may achieve PBR-based fairness, it does not take into account the transmission requirement of delay-critical data in logical channels. Consequently, in cases where there is delay-critical data in a logical channel without a positive number of tokens in the bucket, the legacy LCP procedure may not ensure the in-time transmission of the delay-critical data regardless of the priority order of this logical channel. An example that the number of tokens of a logical channel becomes negative is when Bj > 0 and Bj minus the size of pending radio link control (RLC) SDU < 0. Since the UE should not segment an RLC SDU if the whole SDU fits into the remaining resources (there is sufficient UL grant) of the associated MAC entity, Bj will become negative to avoid segmentation after the packet build of this pending RLC SDU. This example also applies to a partially transmitted SDU or a retransmitted RLC PDU. Once the Bj of a logical channel becomes negative, the logical channel may not be allocated with resources if there is not enough time for Bj to come up to a positive number before the resource allocation for the next UL grant, despite there being delay-critical data queueing to be transmitted in this logical channel.

In view of the above, the present disclosure proposes a number of schemes pertaining to LCP enhancements in mobile communications. According to certain schemes of the present disclosure, the MAC entity of a UE may allocate resources in a decreasing priority order to both logical channels with Bj > 0 and logical channels with delay-critical data, such that a logical channel with delay-critical data may still be allowed for resource allocation even if it does not have a positive number of tokens (i.e., Bj ≤ 0). Furthermore, according to certain schemes of the present disclosure, the MAC entity of a UE may selectively exempt the logical channels with delay-critical data from decrementing the number of tokens, or allow the logical channels with delay-critical data to reduce the amount of the decrement on the number of tokens, such that a logical channel with delay-critical data may always have a positive number of tokens (i.e., Bj always > 0). Accordingly, by applying the schemes of the present disclosure, logical channels with delay-critical data will be qualified for UL resource allocation regardless of the priority order of the logical channels, which allows the delay requirements to be met for the applications/services that require low-latency communication.

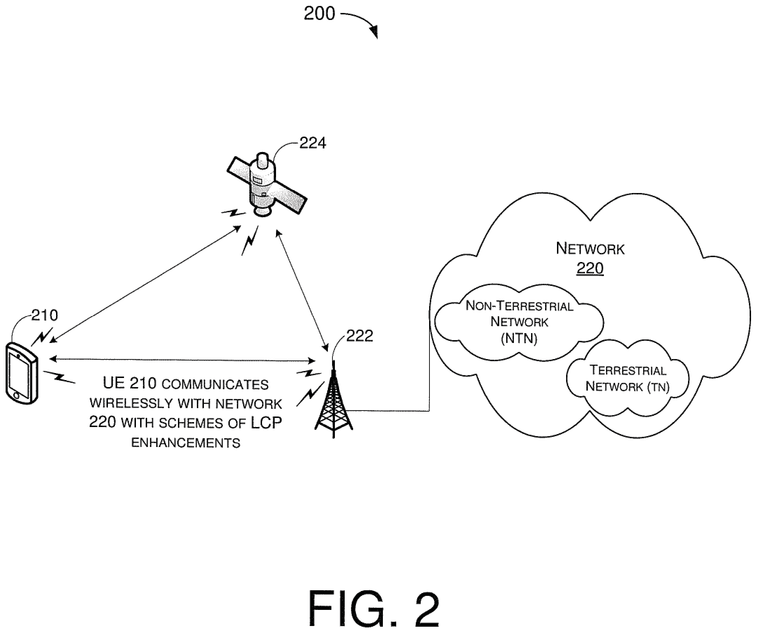

FIG. 2 illustrates an example scenario 200 of a communication environment in which various solutions and schemes in accordance with the present disclosure may be implemented. Scenario 200 involves a UE 210 in wireless communication with a network 220 (e.g., a wireless network including a non-terrestrial network (NTN) and a TN) via at least a terrestrial network node 222 (e.g., a base station (BS) such as an eNB, a gNB, or a transmission/reception point (TRP)) and/or at least a non-terrestrial network node 224 (e.g., a satellite). For example, the terrestrial network node 222 may form a TN serving cell for wireless communication with the UE 210, or the terrestrial network node 222 and the non-terrestrial network node 224 may form an NTN serving cell for wireless communication with the UE 210. In some implementations, the network 220 may be a 4G/5G/B5G/6G network, and the UE 210 may be a smartphone, a tablet computer, a laptop computer or a notebook computer. Alternatively, the network 220 may be an loT/ NB-loT/lloT network, and the UE 210 may be an loT device such as an NB-loT UE or an enhanced machine-type communication (eMTC) UE (e.g., a bandwidth reduced low complexity (BL) UE or a coverage enhancement (CE) UE). In such communication environment, the UE 210, the network 220, the terrestrial network node 222, and/or the non-terrestrial network node 224 may implement various schemes pertaining to LCP enhancements in mobile communications in accordance with the present disclosure, as described below. It is noteworthy that, while the various proposed schemes may be individually or separately described below, in actual implementations, some or all of the proposed schemes may be utilized or otherwise implemented jointly. Of course, each of the proposed schemes may be utilized or otherwise implemented individually or separately.

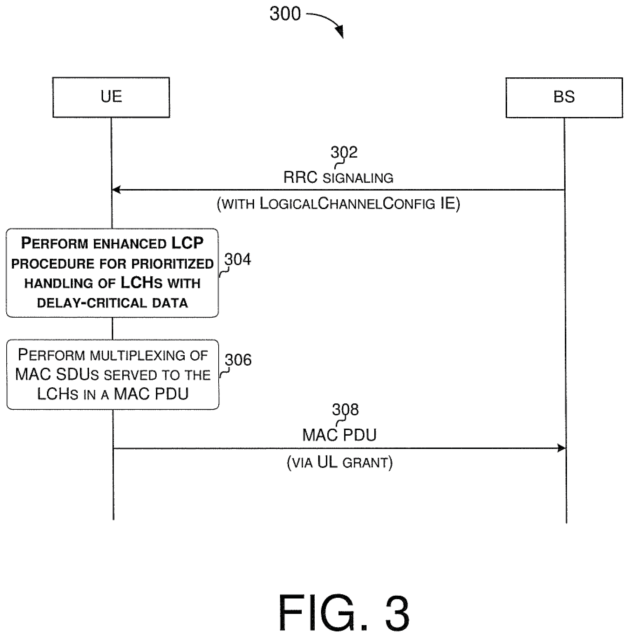

FIG. 3 illustrates an example scenario 300 of the enhanced LCP procedure in accordance with an implementation of the present disclosure. In step 302, the UE receives an RRC signaling from the BS. Specifically, the RRC signaling includes the configuration of logical channels for the UE. The configuration may be contained in a LogicalChannelConfig information element (IE) in the RRC signaling. The LogicalChannelConfig IE may include parameters, such as a logical channel priority, a PBR, a BSD, and a remainingTimeThreshold for each logical channel, where the logical channel priority, the PBR, and the BSD may be used for UL resource allocation, and the remainingTimeThreshold may be used for identifying whether the data of a logical channel is delay critical. Specifically, the data of a logical channel is associated with a discard timer (e.g., packet data convergence protocol (PDCP discard timer)), and if the remaining time of the discard timer is less than the remainingTimeThreshold, the data is considered as delay-critical data (which means it should be prioritized over other data). However, if the data does not get transmitted before the discard timer expires, then the data is discarded. In step 304, the UE performs the enhanced LCP procedure for prioritized handling of logical channels with delay-critical data, as will be described in detail in the following embodiments. Specifically, the enhanced LCP procedure is performed based on UL resource allocation for a new transmission with an UL grant (e.g., a configured grant received via the same or different RRC signaling, or a dynamic grant received via a downlink control information (DCI)). In step 306, the UE multiplexes the MAC SDUs served to the logical channels in a MAC PDU. Then, in step 308, the MAC PDU is passed down to the Physical Layer (or called Layer-1 (L1)) through a transport channel for transmission on the UL grant to the BS.

Under a first proposal of the present disclosure, when a new transmission is performed, the MAC entity of the UE may allocate resources in a decreasing priority order to both logical channels with Bj > 0 and logical channels with delay-critical data. That is, a logical channel with delay-critical data is still allowed for resource allocation even if it does not have a positive number of tokens (i.e., Bj ≤ 0).

In some implementations, only higher-priority order logical channels with delay-critical data may be allowed for resource allocation regardless of the number of tokens they have.

In some implementations, only logical channels with delay-critical data whose remaining time is less than a threshold may be allowed for resource allocation regardless of the number of tokens they have. The threshold may be configured by a new parameter (e.g., called CritialremainingTimeThreshold) introduced in the LogicalChannelConfig IE. In one example, the CritialremainingTimeThreshold may be more stringent or less than the remainingTimeThreshold that is used to determine whether data of a logical channel is delay-critical or not. That is, the CritialremainingTimeThreshold may be configured to be less than the remainingTimeThreshold.

Under a second proposal of the present disclosure, after the logical channels selected for the UL grant with Bj > 0 are allocated resources in a decreasing priority order, only Bj of the logical channel without delay-critical data remained in the logical channel after the resource allocation will be decremented by the total size of MAC SDUs served to it. That is, if the resources allocated to logical channel j is not sufficient for it to transmit all delay-critical data in the logical channel, its Bj will not be decremented by the total size of MAC SDUs served to it. Accordingly, logical channels with delay-critical data may always have a positive number of tokens (i.e., Bj always > 0), which allows such logical channels to be always qualified for resource allocation.

In some implementations, only higher-priority order logical channels are entitled to the "non-decrement" privilege in the above-described second proposal. That is, Bj of a lower-priority order logical channel will still be decremented by the total size of MAC SDUs served to it, even if the lower-priority order logical channel still has delay-critical data remained after the resource allocation. In other words, only logical channels with higher-priority order and delay-critical data will always have a positive number of tokens, and thus, will always be qualified for resource allocation.

In some implementations, only logical channels with delay-critical data whose remaining time is less than a threshold (e.g., CritialremainingTimeThreshold) are entitled to the "non-decrement" privilege in the above-described second proposal. The remaining time may be an absolute remaining time as well as a relative remaining delay (e.g., synchronization threshold for Multi-Modal XR data).

In some implementations, only logical channels with delay-critical data and whose Bj will become negative if decremented by the total size of MAC SDUs served to the logical channel are entitled to the "non-decrement" privilege in the above-described second proposal. That is, the logical channel whose Bj is greater than or equal to the total size of MAC SDUs served to it will be decremented by the total size of MAC SDUs served to it, even if the logical channel still has delay-critical data remained after the resource allocation.

In some implementations, the decrement amount of Bj in the above-described second proposal may be flexible. For instance, Bj of a higher-priority order logical channel with delay-critical data remained after the resource allocation will be decremented by an amount less than the total size of MAC SDUs served to it, while Bj of a lower-priority order logical channel with delay-critical data remained after the resource allocation will still be decremented by the total size of MAC SDUs served to it. In one example, Bj of a higher-priority order logical channel with delay-critical data remained after the resource allocation is decremented by half the total size of MAC SDUs served to it. Accordingly, logical channels with higher-priority order and delay-critical data may have a better chance of having a positive number of tokens and thus, may be more likely to be qualified for resource allocation.

### Illustrative implementations

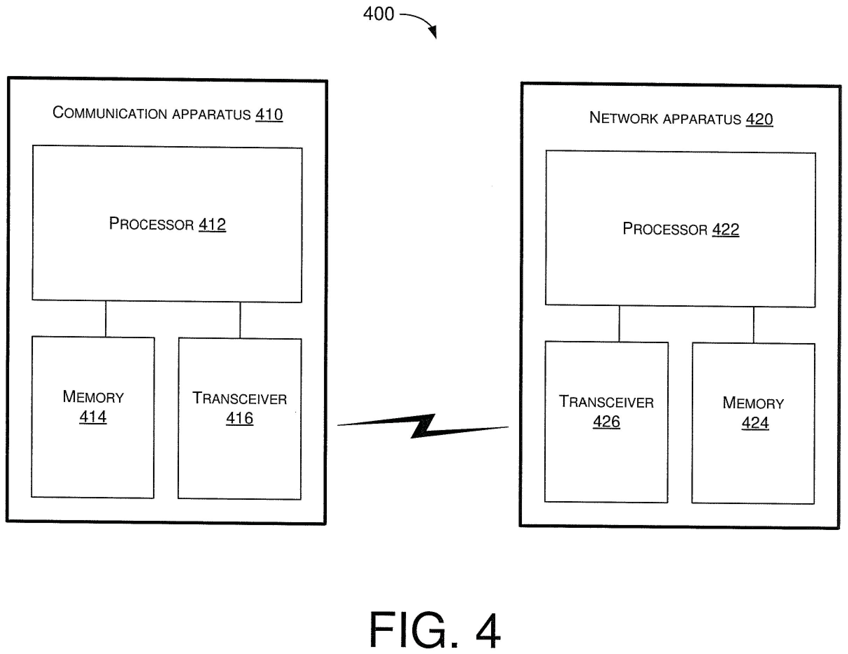

FIG. 4 illustrates an example communication system 400 having an example communication apparatus 410 and an example network apparatus 420 in accordance with an implementation of the present disclosure. Each of communication apparatus 410 and network apparatus 420 may perform various functions to implement schemes, techniques, processes and methods described herein pertaining to LCP enhancements in mobile communications, including scenarios/schemes described above as well as processes 500 and 600 described below.

Communication apparatus 410 may be a part of an electronic apparatus, which may be a dual-steer device containing one or more UEs such as a portable or mobile apparatus, a wearable apparatus, a wireless communication apparatus or a computing apparatus. For instance, communication apparatus 410 may be implemented in a smartphone, a smartwatch, a personal digital assistant, an electronic control unit (ECU) in a vehicle, a digital camera, or a computing equipment such as a tablet computer, a laptop computer or a notebook computer. Communication apparatus 410 may also be a part of a machine type apparatus, which may be an IoT, NB-loT, eMTC, lioT UE such as an immobile or a stationary apparatus, a home apparatus, a roadside unit (RSU), a wire communication apparatus or a computing apparatus. For instance, communication apparatus 410 may be implemented in a smart thermostat, a smart fridge, a smart door lock, a wireless speaker or a home control center. Alternatively, communication apparatus 410 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Communication apparatus 410 may include at least some of those components shown in FIG. 4 such as a processor 412, for example. Communication apparatus 410 may further include one or more other components not pertinent to the proposed schemes of the present disclosure (e.g., internal power supply, display device and/or user interface device), and, thus, such component(s) of communication apparatus 410 are neither shown in FIG. 4 nor described below in the interest of simplicity and brevity.

Network apparatus 420 may be a part of an electronic apparatus, which may be a network node such as a satellite, a BS, a small cell, a router, or a gateway of a 4G/5G/B5G/6G, NR, loT, NB-loT or lioT network. Alternatively, network apparatus 420 may be implemented in the form of one or more IC chips such as, for example and without limitation, one or more single-core processors, one or more multi-core processors, or one or more RISC or CISC processors. Network apparatus 420 may include at least some of those components shown in FIG. 4 such as a processor 422, for example. Network apparatus 420 may further include one or more other components not pertinent to the proposed scheme of the present disclosure (e.g., internal power supply, display device and/or user interface device), and, thus, such component(s) of network apparatus 420 are neither shown in FIG. 4 nor described below in the interest of simplicity and brevity.

In one aspect, each of processor 412 and processor 422 may be implemented in the form of one or more single-core processors, one or more multi-core processors, or one or more CISC processors. That is, even though a singular term "a processor" is used herein to refer to processor 412 and processor 422, each of processor 412 and processor 422 may include multiple processors in some implementations and a single processor in other implementations in accordance with the present disclosure. In another aspect, each of processor 412 and processor 422 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 412 and processor 422 is a special-purpose machine specifically designed, arranged and configured to perform specific tasks, including the enhanced LCP procedure, in a device (e.g., as represented by communication apparatus 410) and a network node (e.g., as represented by network apparatus 420) in accordance with various implementations of the present disclosure.

In some implementations, communication apparatus 410 may also include a transceiver 416 coupled to processor 412 and capable of wirelessly transmitting and receiving data. In some implementations, transceiver 416 may be capable of wirelessly communicating with different types of UEs and/or wireless networks of different RATs. In some implementations, transceiver 416 may be equipped with a plurality of antenna ports (not shown) such as, for example, four antenna ports. That is, transceiver 416 may be equipped with multiple transmit antennas and multiple receive antennas for multiple-input multiple-output (MIMO) wireless communications. In some implementations, network apparatus 420 may also include a transceiver 426 coupled to processor 422. Transceiver 426 may include a transceiver capable of wirelessly transmitting and receiving data. In some implementations, transceiver 426 may be capable of wirelessly communicating with different types of UEs of different RATs. In some implementations, transceiver 426 may be equipped with a plurality of antenna ports (not shown) such as, for example, four antenna ports. That is, transceiver 426 may be equipped with multiple transmit antennas and multiple receive antennas for MIMO wireless communications.

In some implementations, communication apparatus 410 may further include a memory 414 coupled to processor 412 and capable of being accessed by processor 412 and storing data therein. In some implementations, network apparatus 420 may further include a memory 424 coupled to processor 422 and capable of being accessed by processor 422 and storing data therein. Each of memory 414 and memory 424 may include a type of random-access memory (RAM) such as dynamic RAM (DRAM), static RAM (SRAM), thyristor RAM (TRAM) and/or zero-capacitor RAM (Z-RAM). Alternatively, or additionally, each of memory 414 and memory 424 may include a type of read-only memory (ROM) such as mask ROM, programmable ROM (PROM), erasable programmable ROM (EPROM) and/or electrically erasable programmable ROM (EEPROM). Alternatively, or additionally, each of memory 414 and memory 424 may include a type of non-volatile random-access memory (NVRAM) such as flash memory, solid-state memory, ferroelectric RAM (FeRAM), magnetoresistive RAM (MRAM) and/or phase-change memory.

Each of communication apparatus 410 and network apparatus 420 may be a communication entity capable of communicating with each other using various proposed schemes in accordance with the present disclosure. For illustrative purposes and without limitation, a description of capabilities of communication apparatus 410, as a UE, and network apparatus 420, as a network node (e.g., BS), is provided below with processes 500 and 600.

### Illustrative Processes

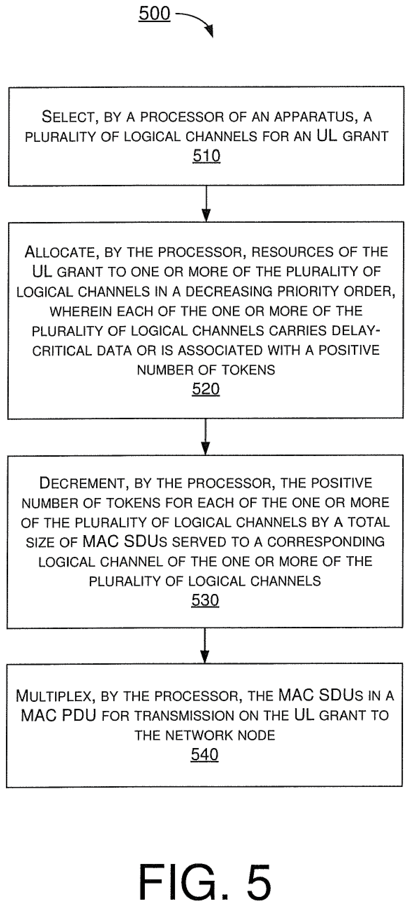

FIG. 5 illustrates an example process 500 in accordance with an implementation of the present disclosure. Process 500 may be an example implementation of above scenarios/schemes, whether partially or completely, with respect to LCP enhancements in mobile communications under the first proposed scheme of the present disclosure. Process 500 may represent an aspect of implementation of features of communication apparatus 410. Process 500 may include one or more operations, actions, or functions as illustrated by one or more of blocks 510 to 540. Although illustrated as discrete blocks, various blocks of process 500 may be divided into additional blocks, combined into fewer blocks, or eliminated, depending on the desired implementation. Moreover, the blocks of process 500 may be executed in the order shown in FIG. 5 or, alternatively in a different order. Process 500 may be implemented by or in communication apparatus 410 or any suitable UE or machine type device. Solely for illustrative purposes and without limiting the scope, process 500 is described below in the context of communication apparatus 410, as a UE, and network apparatus 420, as a network node (e.g., a BS such as gNB). Process 500 may begin at block 510.

At block 510, process 500 may involve processor 412 of communication apparatus 410 selecting a plurality of logical channels for an UL grant. Process 500 may proceed from block 510 to block 520.

At block 520, process 500 may involve processor 412 allocating resources of the UL grant to one or more of the logical channels in a decreasing priority order, wherein each of the one or more logical channels carries delay-critical data or is associated with a positive number of tokens. Process 500 may proceed from block 520 to block 530.

At block 530, process 500 may involve processor 412 decrementing the positive number of tokens for each of the one or more logical channels by a total size of MAC SDUs served to the corresponding logical channel. Process 500 may proceed from block 530 to block 540.

At block 540, process 500 may involve processor 412 multiplexing the MAC SDUs in a MAC PDU for transmission on the UL grant to network apparatus 420 via transceiver 416.

In some implementations, at least one of the one or more logical channels that carry delay-critical data may be associated with a non-positive number of tokens.

In some implementations, each of the one or more logical channels that carry delay-critical data may be associated with a higher priority than other logical channels without delay-critical data or without a positive number of tokens.

In some implementations, the delay-critical data may be associated with a remaining time of a discard timer, and the remaining time may be less than a first threshold.

In some implementations, the first threshold may be different from, more stringent or less than a second threshold that is used to determine whether data of a logical channel is delay-critical or not.

In some implementations, the first threshold may be configured in a LogicalChannelConfig IE of an RRC signaling received from network apparatus 420.

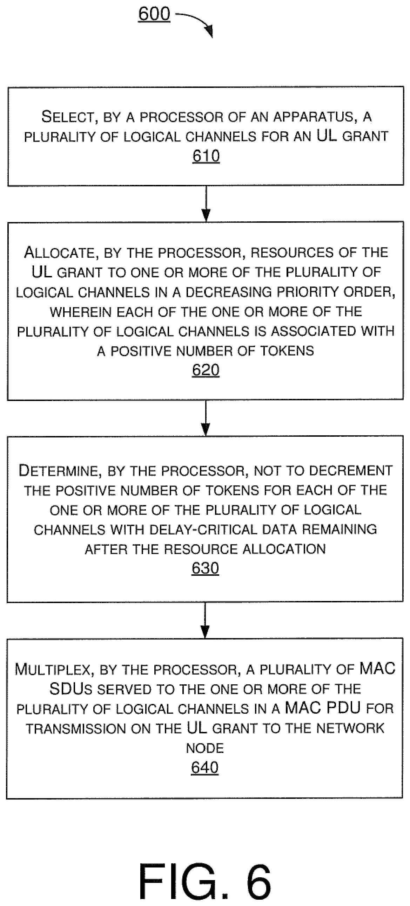

FIG. 6 illustrates an example process 600 under schemes in accordance with an implementation of the present disclosure. Process 600 may represent an aspect of implementing various proposed designs, concepts, schemes, systems and methods described above, whether partially or entirely, with respect to LCP enhancements in mobile communications under the second proposed scheme of the present disclosure. Process 600 may represent an aspect of implementation of features of communication apparatus 410. Process 600 may include one or more operations, actions, or functions as illustrated by one or more of blocks 610 to 640. Although illustrated as discrete blocks, various blocks of process 600 may be divided into additional blocks, combined into fewer blocks, or eliminated, depending on the desired implementation. Moreover, the blocks/sub-blocks of process 600 may be executed in the order shown in FIG. 6 or, alternatively in a different order. Process 600 may be implemented by or in communication apparatus 410 or any suitable UE or machine type device. Solely for illustrative purposes and without limiting the scope, process 600 is described below in the context of communication apparatus 410, as a UE, and network apparatus 420, as a network node (e.g., a BS such as gNB). Process 600 may begin at block 610.

At block 610, process 600 may involve processor 412 of communication apparatus 410, selecting a plurality of logical channels for an UL grant. Process 600 may proceed from block 610 to block 620.

At block 620, process 600 may involve processor 412 allocating resources of the UL grant to one or more of the logical channels in a decreasing priority order, wherein each of the one or more logical channels is associated with a positive number of tokens. Process 600 may proceed from block 620 to block 630.

At block 630, process 600 may involve processor 412 determining not to decrement the positive number of tokens for each of the one or more logical channels with delay-critical data remained after the resource allocation. Process 600 may proceed from block 630 to block 640.

At block 640, process 600 may involve processor 412 multiplexing a plurality of MAC SDUs served to the one or more logical channels in a MAC PDU for transmission on the UL grant to network apparatus 420 via transceiver 416.

In some implementations, process 600 may further involve processor 412 decrementing the positive number of tokens, for each of the one or more logical channels without delay-critical data remained after the resource allocation, by a total size of MAC SDUs served to the corresponding logical channel.

In some implementations, the determining of not to decrement the positive number of tokens may be performed for each of the one or more logical channels with delay-critical data remained after the resource allocation and with a higher priority than other logical channels.

In some implementations, process 600 may further involve processor 412 decrementing the positive number of tokens, for each of the one or more logical channels with a lower priority than other logical channels and with delay-critical data remained after the resource allocation, by the total size of MAC SDUs served to the corresponding logical channel.

In some implementations, the determining of not to decrement the positive number of tokens may be performed for each of the one or more logical channels with delay-critical data associated with a remaining time of a discard timer, and the remaining time may be less than a first threshold.

In some implementations, process 600 may further involve processor 412 decrementing the positive number of tokens, for each of the one or more logical channels with delay-critical data associated with the remaining time greater than or equal to the first threshold, by the total size of MAC SDUs served to the corresponding logical channel.

In some implementations, the first threshold may be different from, more stringent or less than a second threshold that is used to determine whether data of a logical channel is delay-critical or not.

In some implementations, the determining of not to decrement the positive number of tokens may be performed in an event that the positive number of tokens is less than the total size of MAC SDUs served to the corresponding logical channel.

In some implementations, process 600 may further involve processor 412 decrementing the positive number of tokens, for each of the one or more logical channels with delay-critical data, by the total size of MAC SDUs served to the corresponding logical channel in an event that the positive number of tokens is greater than or equal to the total size of MAC SDUs served to the corresponding logical channel.

In light of the above-described embodiments, it is noteworthy that, by applying the schemes of the present disclosure, the LCP procedure is enhanced to ensure that logical channels with delay-critical data are qualified for UL resource allocation even if they are not associated with positive number of tokens, which allows the delay requirements to be met for the applications/services that require low-latency communication. Accordingly, the enhanced LCP may provide better support for low-latency services, such as XR services.

### Additional Notes

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

Further aspects useful for understanding the present invention are outlined in the following:
1. An apparatus, comprising:
   a transceiver which, during operation, wirelessly communicates with a network node; and
   a processor communicatively coupled to the transceiver such that, during operation, the processor performs operations comprising:
      selecting a plurality of logical channels for an uplink (UL) grant;
      allocating resources of the UL grant to one or more of the logical channels in a decreasing priority order, wherein each of the one or more logical channels carries delay-critical data or is associated with a positive number of tokens;
      decrementing the positive number of tokens for each of the one or more logical channels by a total size of medium access control (MAC) service data units (SDUs) served to the corresponding logical channel; and
      multiplexing the MAC SDUs in a MAC protocol data unit (PDU) for transmission on the UL grant to the network node via the transceiver.
2. The apparatus of 1, wherein at least one of the one or more logical channels that carry delay-critical data is associated with a non-positive number of tokens.
3. The apparatus of 1, wherein the delay-critical data is associated with a remaining time of a discard timer, and the remaining time is less than a first threshold.
4. The apparatus of 3, wherein the first threshold is different from a second threshold that is used to determine whether data of a logical channel is delay-critical or not.
5. The apparatus of 4, wherein the first threshold is more stringent or less than the second threshold.
6. The apparatus of 3, wherein the first threshold is configured in a LogicalChannelConfig information element (IE) of a radio resource control (RRC) signaling received from the network node.
7. A network node, comprising:
   a transceiver which, during operation, wirelessly communicates with an apparatus; and
   a processor communicatively coupled to the transceiver such that, during operation, the processor performs operations comprising:
      transmitting, via the transceiver, a radio resource control (RRC) signaling to the apparatus, wherein the RRC signaling comprises a LogicalChannelConfig information element (lE) comprising a first threshold; and
      receiving, via the transceiver, a medium access control (MAC) protocol data unit (PDU) with a plurality of MAC service data units (SDUs) multiplexed therein from the apparatus, wherein the MAC SDUs are served to one or more logical channels in the apparatus, each of the one or more logical channels carries delay-critical data or is associated with a positive number of tokens, and wherein the delay-critical data is associated with a remaining time of a discard timer and the remaining time is less than the first threshold.
8. The network node of 7, wherein at least one of the one or more logical channels that carry delay-critical data is associated with a non-positive number of tokens.
9. The network node of 7, wherein the first threshold is different from a second threshold that is used to determine whether data of a logical channel is delay-critical or not.

## Claims

1. An apparatus, comprising:
a transceiver which, during operation, wirelessly communicates with a network node; and
a processor communicatively coupled to the transceiver such that, during operation, the processor performs operations comprising:
selecting a plurality of logical channels for an uplink (UL) grant;
allocating resources of the UL grant to one or more of the logical channels in a decreasing priority order, wherein each of the one or more logical channels is associated with a positive number of tokens;
determining not to decrement the positive number of tokens for each of the one or more logical channels with delay-critical data remained after the resource allocation; and
multiplexing a plurality of medium access control (MAC) service data units (SDUs) served to the one or more logical channels in a MAC protocol data unit (PDU) for transmission on the UL grant to the network node via the transceiver.

2. The apparatus of Claim 1, wherein, during operation, the processor further performs operations comprising:
decrementing the positive number of tokens, for each of the one or more logical channels without delay-critical data remained after the resource allocation, by a total size of MAC SDUs served to the corresponding logical channel.

3. The apparatus of Claim 1, wherein, during operation, the processor further performs operations comprising:
the determining of not to decrement the positive number of tokens is performed for each of the one or more logical channels with delay-critical data remained after the resource allocation and with a higher priority than other logical channels; or
decrementing the positive number of tokens, for each of the one or more logical channels with a lower priority than other logical channels and with delay-critical data remained after the resource allocation, by the total size of MAC SDUs served to the corresponding logical channel.

4. The apparatus of Claim 1, wherein, during operation, the processor further performs operations comprising:
the determining of not to decrement the positive number of tokens is performed for each of the one or more logical channels with delay-critical data associated with a remaining time of a discard timer, and the remaining time is less than a first threshold; or
decrementing the positive number of tokens, for each of the one or more logical channels with delay-critical data associated with the remaining time greater than or equal to the first threshold, by the total size of MAC SDUs served to the corresponding logical channel.

5. The apparatus of Claim 4, wherein the first threshold is different from a second threshold that is used to determine whether data of a logical channel is delay-critical or not.

6. The apparatus of Claim 1, wherein, during operation, the processor further performs operations comprising:
the determining of not to decrement the positive number of tokens is performed in an event that the positive number of tokens is less than the total size of MAC SDUs served to the corresponding logical channel; or
decrementing the positive number of tokens, for each of the one or more logical channels with delay-critical data, by the total size of MAC SDUs served to the corresponding logical channel in an event that the positive number of tokens is greater than or equal to the total size of MAC SDUs served to the corresponding logical channel.
